# EUROPEAN PATENT SPECIFICATION

(11) **EP 0 256 130 B1**
(45) Date of publication and mention of the grant of the patent: **31.03.1993**
(21) Application number: 87900876.1
(22) Date of filing: 19.01.1987
(51) Int. Cl.: C08J 5/24, C08G 59/00, C08G 59/72, C08F 299/02

(54) **PREPREG AND ITS COMPOSITE**
PREPREG UND DESSEN KOMPOSIT
PREIMPREGNE ET SON COMPOSITE

(30) Priority: 21.01.1986 JP 10585/86; 01.08.1986 JP 180043/86
(43) Date of publication of application: 24.02.1988
(73) Proprietor: TORAY INDUSTRIES, INC., Tokyo 103 (JP)
(72) Inventor: SEIYA, Yuji, Shiga 520 (JP); ODAWARA, Hiroyuki, Shiga 524 (JP)
(74) Representative: Harrison, David Christopher
(86) International application number: PCT/JP87/00028
(87) International publication number: WO 87/04444

(56) References cited:
- EP-A- 0 124 808
- GB-A- 930 437
- JP-A- 588 724
- JP-A-57 123 210

## Description

### TECHNICAL FIELD

The present invention relates to advanced composite materials.

### BACKROUND TECHNIQUES

Prepregs formed by impregnating a fiber-paralleled sheet of carbon fibers, glass fibers, aromatic polyamide fibers, etc. or woven cloth, etc. with a matrix resin are widely used in sporting and leisure areas as golf shafts, fishing rods, racket frames, etc.

Furthermore in recent years, also in the manufacturing industries, they show rapid growth in application, for example, as materials for the aerospace industry, etc. For instance, a prepreg is laid up in the lamination in a mold and worked into a composite using an autoclave, or is wound around a mandrel as tape wrapping, to be worked into a rod, shaft, etc. for practical use.

A continuous fiber reinforced composite material is high in tensile strength in the fiber direction, but the strength in the direction perpendicular to the fiber direction depends on the matrix resin or the bond between the resin and the fibers being generally lower than that in the fiber direction. The elongation before breaking is also smaller in the perpendicular direction that in the fiber direction. For example, in the case of carbon fibers, it is 1.3% in the fiber direction, but only about 0.8% in the perpendicular direction. Even if a seemingly isotropic material is formed by alternately laminating a unidirectional material at 0 degree, 90 degrees, and 45 degrees, the composite material is at first broken in the direction perpendicular to the fiber direction when the elongation in the perpendicular direction is low, and as a result the strength in the fiber direction cannot be sufficiently used. If the elastic modulus of the matrix resin is lowered, the elongation is enhanced, but the compressive strength is lowered. The object of the present invention is to enhance the strength and elongation in the perpendicular direction without lowering the elastic modulus, for providing well balanced materials.

Various attempts have been made to improve the properties of epoxy resins by adding a polyvinyl acetal resin to an epoxy resin. For example, US patents include the following:

### USP 3172921

Polybutadiene, polyvinyl formal, epoxy hardener and peroxide are added to a thermosetting resin such as epoxy resin or diallyl phthalate, to enhance electrical and physical properties.

### USP 3239598

Polyvinyl acetal, epoxy resin and furthermore a hardener such as urea resin, melamine resin or phenol resin are used for insulated wires.

### USP 3571491

An insulating material containing a polyester, epoxy, polyvinyl acetal resin and filler is used, to provide a material good in mechanical and electrical properties.

### USP 4193799

An epoxy, polyvinyl acetal resin and aromatic onium salt are mixed, for use as a photoresist.

### USP 4309512

A latent hardener such as dicyandiamide is added to modified bismaleimide, epoxy resin and polyvinyl formal, to obtain a heat resistant resin composition.

A further example is to be found in EP-A-0124808 which discloses a reactive plastisol dispersion composition which can be used for making an adhesive, the composition comprising a polyvinyl acetal thermoplast in powder form, a plasticizer including an epoxy resin and a latent curing agent which may be dicyandiamide.

As can be seen from the above, polyvinyl acetal resin is relatively good in compatibility with epoxy resins, and is used to reform various epoxy resins. It is also known that glass fibers and the like can be impregnated with such blend resins, to be used as prepregs.

However, a chemical material containing a functional group with a strong hydrogen bond is low in compatibility with the polyvinyl acetal resin, and, for example, if dicyandiamide is used to harden the mixture of an epoxy resin and a polyvinyl acetal resin, considerable phase separation occurs during hardening. The phase separation lowers the strength, and advanced composite materials required to be high in strength could be obtained only by mixing with another resin high in compatibility, as disclosed in USP 4309512.

The inventors studied intensively to solve this problem, and as a result completed the present invention.

### DISCLOSURE OF THE INVENTION

According to the present invention composite materials are composed of an epoxy resin composition and fibers hardened by dicyandiamide and/or a urea derivative, with 1 to 30 parts by weight of a polyvinyl formal based resin (PVF) of 5 microns (micrometers) or less in average grain size finely dispersed in each 100 parts of said hardened epoxy resin composition,. A composite material containing polyvinyl formal of 5 microns (µm) or less in average grain size finely dispersed in an epoxy resin composite material hardened by dicyandiamide and/or a urea derivative is enhanced in tensile strength and elongation in the perpendicular direction, and not lowered in elastic modulus when the fibers are carbon fibers arranged in parallel. Such a composite material seems to be able to be obtained, for example, by adding polyvinyl formal to an epoxy resin composition for melting and mixing at a high temperature, cooling, and adding a dicyandiamide and/or a urea derivative for mixing as a hardener. However, in the system of dicyandiamide and/or a urea derivative, heating for hardening involves the problem of phase separation of polyvinyl formal.

However, the inventors have been able to inhibit the phase separation during the hardening of the mixture of an epoxy resin composition and polyvinyl formal, by combining a special type of polyvinyl formal resin and a social type of epoxy resin composition,and successfully to disperse polyvinyl formal 5 micron (µm) or less in average grain size into a composite material composed of an epoxy resin composition and fibers hardened by dicyandiamide and/or a urea derivative. They found that such a composite material is greatly enhanced in tensile strength and elongation in the direction perpendicular to the fiber direction.

The state of dispersion can be evaluated, for example, by using an electron microphotograph based on 0s0₄ dyed ultrathin sectioning method. Large phase separation can be observed even with an optical microscope. The reason is that phase separation causes a difference in density. The average grain size of 5 microns (µm) or less means that in the case of uniform dispersion of spherical grains, the number average of diameters of all the grains in a section of about 300 microns (µm) square is 5 microns (µm) or less. When the grains dispersed are oval or irregular, the false diameter of each grain should be expressed by (the longest length + the shortest length)/2, and if the number average of the diameters thus obtained of all the grains in a section of about 300 microns (µm) square is 5 microns (µm) or less, the grains conform to the present invention. As for the state of dispersion, it is also allowed that the polyvinyl formal grains contain the epoxy resin particles dispersed therein.

As far as the composite material composed of an epoxy resin composition and fibers hardened by dicyandiamide and/or a urea derivative contain polyvinyl formal of 5 microns (µm) or less in average grain size, the kinds of the epoxy resins in the epoxy resin composition are not especially limited.

For example, the resin composition for obtaining an intended composite material can be selected from those enumerated below. However, the resin compositions which can be used for the composite materials of the present invention are not limited to them.
1. Resin compositions obtained by adding 1 to 30 parts by weight of a polyvinyl formal based resin (PVF) to 100 parts by weight an epoxy resin composition containing 10 to 40 parts by weight of high molecular bisphenol type epoxy resins (A type, F type, S type) of 4000 or more in number average molecular weight and 20 to 45 parts by weight of a phenol novolak type and/or its modified epoxy resin, for melting and mixing, and furthermore adding dicyandiamide (DICY) and/or a urea derivative as a hardener, for mixing.
2. Resin compositions obtained by adding 1 to 30 parts by weight of a polyvinyl formal based resin (PVF) to 100 parts by weight of an epoxy resin composition consisting of 40 to 100 parts by weight of bisphenol type epoxy resins (A type, F type, S type) of 1800 to 3500 in number average molecular weight and 0 to 60 parts by weight of a phenol novolak type and/or its modified epoxy resin, for melting and mixing, and furthermore adding dicyandiamide (DICY) and/or a urea derivative, for mixing as a hardener.
3. Resin compositions, obtained by adding 1 to 30 parts by weight of a polyvinyl formal based resin (PVF) to 100 parts by weight of an epoxy resin composition consisting of 40 to 100 parts by weight of bisphenol type epoxy resins (A type, F type, S type,) of 360 to 1100 in number average molecular weight and 0 to 60 parts by weight of a phenol novolak type and/or its modified epoxy resin, for melting and mixing, and furthermore adding dicyandiamide (DICY) and/or a urea derivative, for mixing as a hardener.

### MOST PREFERRED EMBODIMENTS OF THE INVENTION

In said resin compositions 1, the amount of epoxy resins of 4000 or more in molecular weight should be in a range from 10 to 40 parts by weight. If less than 10 parts by weight, the PVF is poorly dispersed. If more than 40 parts by weight, high resin viscosity and low workability are caused in addition to poor dispersibility. Desirably the amount should be 20 to 30 parts by weight. The amount of the phenol novolak type epoxy resin should be in a range from 20 to 45 parts by weight. If less than 20 parts by weight, poor dispersibility and low heat resistance are caused. If more than 45 parts by weight, poor dispersibility is caused. Desirably the amount should be 25 to 40 parts by weight.

The dispersion state of the PVF in the hardened substance greatly affects the properties of the hardened substance. If the grain size in the hardened substance is 10 microns (µm) or more, sufficient strength cannot be obtained. Thus the grain size should be 5 microns (µm) or less. Actually, 10 to 40 parts by weight of phenol A type epoxy resins of 4000 or more in molecular weight, 20 to 45 parts by weight of phenol novolak type epoxy resin and 15 to 70 parts by weight of a further other epoxy resin are molten and mixed, and 1 to 30 parts by weight of a PVF are mixed with 100 parts by weight of the epoxy resins composition, then a hardener being added. The further other epoxy resin is not limited and can be, for example, a low molecular bisphenol A type epoxy resin. If the amount of the PVF is less than 1 part by weight, the effect cannot be obtained, and if more than 30 parts, poor dispersibility and adverse effect on water absorbability are caused. Preferably the amount should be 3 to 20 parts by weight, more preferably 5 to 15 parts by weight.

In said resin compositions 2, the number average molecular weight of the bisphenol A type epoxy resin composition composed of resins different in molecular weight should be 1800 to 3500. If the number average molecular weight is less than 1800, the PVF is greatly separated during hardening, to kill the effect of enhancing physical properties.

If the number average molecular weight exceeds 3500, the mixture of epoxy resins and PVF becomes high in viscosity, to lower workability unpractically. The bisphenol type epoxy resin composition must be used by 40 parts by weight, not to cause PVF separation, and the PVF may be mixed with an epoxy resin composition consisting of 100% of said composition.

A phenol novolak type epoxy resin can be added in a range from 0 to 60 parts by weight. If more than 60 parts by weight, PVF dispersibility is lowered. Desirably the amount should be 25 to 40 parts by weight. The dispersion state of the PVF greatly affects the physical properties of the hardened substance. If the grain size is 10 microns or more, sufficient strength and elongation are difficult to obtain. Thus, the grain size should be 5 microns (µm) or less.

Actually, several bisphenol type epoxy resins are selected to keep the number average molecular weight in a range from 1800 to 3500. Desirably a number average molecular weight from 2000 to 2500 gives higher effect.

Forty to one hundred parts by weight of such bisphenol type epoxy resins and 0 to 60 parts by weight of a phenol novolak type epoxy resin are molten and mixed, and 1 to 30 parts by weight of a PVF are mixed with 100 parts of the epoxy resin composition, then a hardener being added. If the amount of the PVF is less than 1 part by weight, the effect cannot be obtained, and if more than 30 parts by weight, water absorbability, etc. are adversely affected and fine dispersion is difficult to achieve. Preferably the amount should be 3 to 15 parts by weight, more preferably 5 to 10 parts by weight.

The hardener should be dicyandiamide (DICY) and/or a urea derivative.

In said resin compositions 3, the number average molecular weight of the bisphenol type epoxy resin composition composed of resins different in molecular weight should be 360 to 1100. If the number average molecular weight is larger than 1100, the PVF is greatly separated during hardening, to kill the effect of enhancing physical properties.

To prevent the separation of the PVF, the bisphenol type epoxy resin composition must be used by 40 parts by weight, and the PVF may be mixed with an epoxy resin composition consisting of 100% of said composition.

A phenol novolak type epoxy resin can be added in a range from 0 to 60 parts by weight. If more than 60 parts by weight, PVF dispersibility is lowered. Desirably the amount should be 25 to 40 parts by weight. The dispersion state of the PVF greatly affects the physical properties of the hardened substance. If the grain size is 10 microns or more, sufficient strength and elongation are difficult to obtain. Thus the grain size should be 5 microns or less.

Actually, several bisphenol type epoxy resins are selected, to keep the number average molecular weight in a range from 360 to 1100. Desirably a number average molecular weight from 500 to 1000 gives higher effect.

Forty to one hundred parts by weight of such bisphenol type epoxy resins and 0 to 60 parts by weight of a phenol novolak type epoxy resin are molten and mixed, and 1 to 30 parts by weight of a PVF are mixed with 100 parts by weight of the epoxy resin composition, then a hardener being added. If the amount of the PVF is less then 1 part by weight, no effect can be obtained, and if more than 30 parts by weight, water absorbability, etc. are adversely affected and fine dispersion is difficult to achieve. Preferably the amount should be 3 to 15 parts by weight, more preferably 5 to 10 parts by weight.

The hardener should be dicyandiamide (DICY) and/or a urea derivative.

The bisphenol type epoxy resins can be selected from those marketed. For example, bisphenol A type epoxy resins can be selected from Epikote® 1009, 1007, 1004, 1001, 835, 828, 825, (made by Yuka Shell Epoxy), Epitoto YD-127, 128, 134, 011, 012, 014, 017, 019, 020, YD7017, 7019, YD7029, Phenototo YP50, YP50P, (made by Toto Kasei), Epicron® 840, 850, 855, 860, 1050, 1010, 1030, 3050, 4050, 7050, (made by Dainippon Ink & Chemicals, Inc.), Dow Epoxy DER331, 332, 662, 663U, 662U, (Dow Chemical), Araldite® 6071, 7071, 7072, (Ciba Geigy). Bisphenol F type epoxy resins can be selected from Epicron 830, 830-S, 831 (made by Dainippon Ink & Chemicals, Inc.), Epikote 807 (made by Yuka Shell Epoxy). Bisphenol S type epoxy resins can be selected from Epicron EXA-1514, 4023, 4031 (made by Dainippon Ink & Chemicals, Inc.). Urethane modified bisphenol A type epoxy resins can be selected from Adeka Resin EPV-6, 10, 15 (made by Asahi Denka). Brominated bisphenol A type epoxy resins can be selected from Araldite® 8011 (made by Ciba Geigy), Asahi Epoxy Resin AER711, 714 (made by Asahi Chemical Industry Co., Ltd.), Epicron 152, 1120, 153-60M, 1120-80M, 1125-75M (made by Dainippon Ink & Chemicals, Inc.), Dow Epoxy DER511 (made by Dow Chemical). Their prepolymers can also be used.

The phenol novolak type epoxy resin can be selected from Epikote 152, 154 (made by Yuka shell Epoxy), Dow Epoxy DEN431, 438, 439, 485 (made by Dow Chemical), Ciba Geigy EPN1138, 1139 (made by Ciba Geigy). Modified cresol novolak type epoxy resins can be selected, for example, from Ciba Geigy, ECN1235, 1273, 1280, 1299 (made by Ciba Geigy), EOCN102, 103, 104 (made by Nippon Kayaku Co., Ltd.), Epicron N660, N665, N670, N673, N680, N690, N695 (Dainippon Ink & Chemicals, Inc.). Other modified phenol novolak epoxy resins can also be used.

The PVF is a resin consisting of 60 wt % or more of vinyl formal with the remaining amount of vinyl alcohol, vinyl acetate, etc.

To enhance dispersibility, the PVF should desirably be 1000 or less, more desirably 600 or less in average polymerization degree. Such a PVF can be selected from those marketed, for example, Denka Formal #20, #30, #100, #200 (made by Denki Kagaku Kogyo, KK) and Vinylec B-2, B-1, E, F, L, K (made by Chisso).

The reinforcing fibers, which form part of the composition of the invention, can be chosen from carbon fibers, aromatic polyamide fibers, glass fibers, silicon carbide fibers, boron fibers, alumina fibers and stainless steel fibers.

### [Example 1]

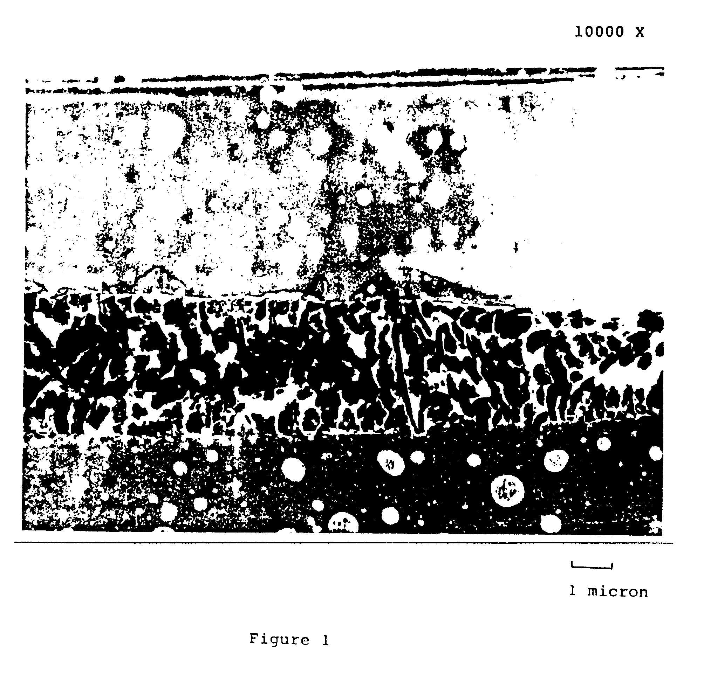

Three point five kilograms (35 parts by weight) of Epikote 1001 (made by Yuka Shell Epoxy) and 2.0 kg (20 parts by weight) of Epikote 828 (made by Yuka Shell Epoxy) (about 780 in the average molecular weight of the two resins) as bisphenol A type epoxy resins, 3.0 kg (30 parts by weight) of Epicron N740 (made by Dainippon Ink & Chemicals, Inc.) and 1.5 kg (15 parts by weight) of Epikote 152 (made by Yuka Shell Epoxy) as phenol novolak type epoxy resins, and 0.8 kg (8 parts by weight) of Denka Formal #20 (made by Denki Kagaku Kogyo K.K.) were molten and mixed for 2 hours at 150°C, and cooled to 60°C. Then, 0.3 kg (3 parts by weight) of dicyandiamide (DICY) and 0.5 kg (5 parts by weight) of a urea derivative [dichlorophenyldimethylurea (DUMU)] as hardeners were added, and the mixture was stirred for 30 minutes, to obtain a resin composition. A sheet of releasing paper was coated with the resin composition, to form a resin sheet, and paralleled carbon fibers "T300" (made by Toray Industries, Inc.) were applied onto the resin film. Another sheet of releasing paper was placed on it, and the lamination was compressed by 120°C hot rolls, to obtain a unidirectional prepreg. The prepreg was laminated in one direction, and molded at 130°C for 2 hours using an autoclave, to obtain a unidirectional composite. It was cut in the direction perpendicular to the fibers by a diamond cutter, to prepare tension test pieces in the perpendicular direction. Tension tests were executed in the perpendicular direction. The results showed, on the average, 9.1 kg/mm² strength, 1.10% elongation and 880 kg/mm² elastic modulus. The PVF dispersion state in the hardened resin was observed, and the grain size was found to be 0.7 micron (µm). A section of a test piece obtained in Example 1 is shown in Fig. 1 as a microphotograph. The white portions indicate the PVF, the gray portions, the epoxy resin composition, and the black portions, the carbon fibers.

### [Example 2]

Four point zero kilograms (40 parts by weight) of Epikote 1001 (made by Yuka Shell Epoxy) and 2.5 kg (25 parts by weight) of Epikote 828 (made by Yuka Shell Epoxy) (770 is the average molecular weight of the two resins) as bisphenol A type epoxy resins, 3.5 kg (15 parts by weight) of Epikote 152 (made by Yuka Shell Epoxy) as a phenol novolak type epoxy resin, and 1.5 kg (15 parts by weight) of Denka Formal #20 (made by Denki Kagaku Kogyo K.K.) were molten and mixed at 150°C for 2 hours and cooled to 60°C, and 0.3 kg (3 parts by weight) of DICY and 0.5 kg (5 parts by weight) of DUMU were added. The mixture was mixed for 30 minutes, to obtain a resin composition. As done in Example 1, the composition was made into a prepreg, and a unidirectional composite was prepared. Tension tests were executed in the perpendicular direction. The results showed 8.2 kg/mm² strength, 1.00% elongation and 870 kg/mm² elastic modulus. The PVF dispersed in the hardened resin was 3 to 4 microns (µm) in grain size.

### [Comparative example 1]

To see the effect of PVF addition, a composition with the PVF removed from the resin composition of Example 1 was prepared, and it was made into a prepreg as done in Example 1, and a unidirectional composite was prepared. Tension tests were executed in the perpendicular direction, and the results showed 7.0 kg/mm² strength, 0.72% elongation and 850 kg/mm² elastic modulus.

As can be seen from the results, the resin not containing any PVF was low both in elongation and strength in the perpendicular direction.

### [Comparative example 2]

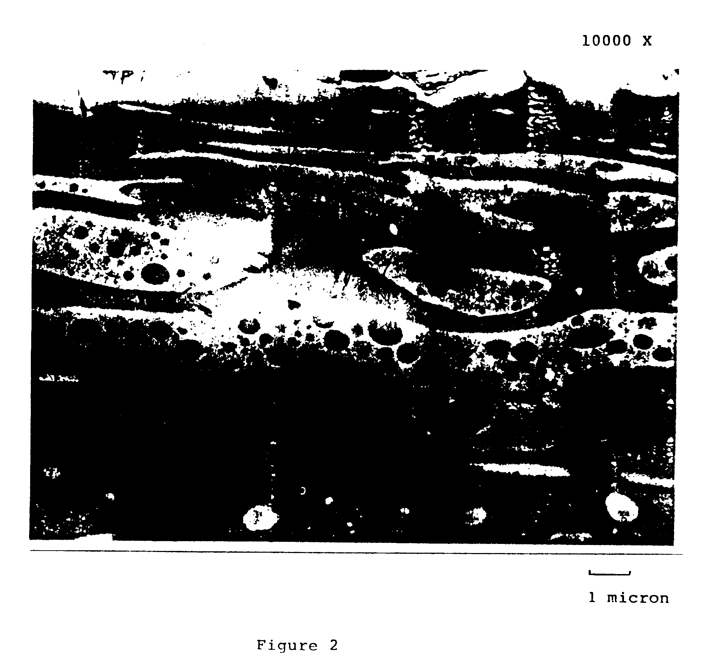

Zero point nine kilograms (9 parts by weight) of Epikote 1009 (made by Yuka Shell Epoxy) and 2.6 kg (26 parts by weight) of Epikote 1001 (made by Yuka Shell Epoxy) (about 1400 in average molecular weight) as bisphenol A type epoxy resins, 2.0 kg (20 parts by weight) of Epicron N740 (Dainippon Ink & Chemicals, Inc.) and 1.5 kg (15 parts by weight) of Epikote 152 (made by Yuka Shell Epoxy) as phenol novolak type epoxy resins, and 0.8 kg (8 parts by weight) of Denka Formal #20 (made by Denki Kagaku Kogyo K.K.) as a PVF were stirred at 150°C for 2 hours and cooled to 60°C, and 0.3 kg of DICY and 0.5 kg of DUMU were added. The mixture was stirred for 30 minutes, to obtain a resin composition. It was made into a prepreg as done in Example 1, and a unidirectional composite was obtained. Tension tests were executed in the perpendicular direction, and the results showed 6.6 kg/mm² strength, 0.73% elongation and 880 kg/mm² elastic modulus without any enhancement in physical properties. The grains, dispersed in the hardened resin were as coarse as 10 microns in grain size. A section of a test piece obtained in Comparative Example Example 2 is shown in Fig. 2 as a microphotograph. The white portions indicate the PVF, the gray portions, the epoxy resin composition, and the black portions, carbon fibers.

As can be seen from the above, if the PVF is large in grain size, the strength in the perpendicular direction cannot be enhanced.

### [Example 3]

One point five kilograms (15 parts by weight) of Epikote 1009 (made by Yuka Shell Epoxy), 2.0 kg (20 parts by weight) of Epikote 1001 (made by Yuka Shell Epoxy) and 2.0 kg (20 parts by weight) of Epikote 828 (made by Yuka Shell Epoxy) (1870 in the average molecular weight of the three resins) as bisphenol A type epoxy resins, 4.5 kg (45 parts by weight) of Epikote 152 (made by Yuka Shell Epoxy) as a phenol novolak type epoxy resin, and 0.6 kg (6 parts by weight) of Denka Formal #30 (made by Denki Kagaku Kogyo K.K.) as a PVF were stirred at 150°C for 2 hours and cooled to 60°C, and o.3 kg of DICY and 0.5 kg of DUMU were added. The mixture was stirred for 30 minutes, to obtain a resin composition. It was made into a prepreg as done in Example 1, and a unidirectional composite was obtained. Tension tests were executed in the perpendicular direction, and the results shored 8.7 kg/mm² strength, 1.08% elongation and 900 kg/mm² elastic modulus. The PVF grains dispersed in the hardened resin were about 3 microns (µm) in grain size.

### [Example 4]

Two point five kilograms (25 parts by weight) of Epikote 1009 (about 5000 in molecular weight, made by Yuka Shell Epoxy) as a bisphenol A type epoxy resin of 4000 or more in molecular weight, 3.0 kg (30 parts by weight) of Epicron N740 (made by Dainippon Ink & Chemicals, Inc.) as a phenol novolak type epoxy resin as a further other epoxy resin, 1.2 kg (12 parts by weight) of ELM120 (made by Sumitomo Chemical Co., Ltd.) as triglycidyl aminophenol, and 0.8 kg (8 parts by weight) of Denka Formal #20 (made by Denki Kagaku Kogyo K.K.) as a PVF were stirred at 150°C for 2 hours, to be molten and mixed, and cooled to 60°C, and 0.3 kg (3 parts by weight) of DICY and 0.4 kg (4 parts by weight) of DUMU were added. The mixture was stirred for 30 minutes, to obtain a resin composition. As done in Example 1, a prepreg was obtained, and a unidirectional composite was prepared. Tension tests were executed in the perpendicular direction, and the results showed 8.4 kg/mm² strength, 1.05% elongation and 920 kg/mm² elastic modulus. The PVF grains dispersed in the hardened resin were about 3 to 4 microns (µm).

### [Comparative example 3]

Zero point eight kilograms (8 parts by weight) of Epikote 1009 (about 5000 in molecular weight, made by Yuka Shell Epoxy) as a bisphenol A type epoxy resin of 4000 or more in molecular weight, 3.0 kg (30 parts by weight) of Epicron N740 (made by Dainippon Ink & Chemicals Inc.) as a phenol novolak type epoxy resin, 6.2 kg (62 parts by weight) of Epikote 828 (made by Yuka Shell Epoxy), a low molecular bisphenol A type epoxy resin as a further other epoxy resin, and 0.8 kg (8 parts by weight) of Denka Formal #20 (made by Denki Kagaku Kogyo K.K.) as a PVF were stirred at 150°C for 2 hours, to be molten and mixed, and cooled to 60°C, and 0.3 kg (3 parts by weight) of DICY and 0.4 kg (4 parts by weight) of DUMU were added. The mixture was stirred for 30 minutes, to obtain a resin composition. As done in Example 1, it was made into a prepreg, and a unidirectional composite was prepared. The PVF grains dispersed after hardening were as coarse as 10 to 20 microns (µm) in grain size.

Tension tests were executed in the perpendicular direction, and the results showed 6.4 kg/mm² strength, 0.76% elongation and 860 kg/mm² elastic modulus. Also from the results, it can be seen that if the PVF grains dispersed after hardening are large, the physical properties cannot be enhanced.

### [Comparative example 4]

Zero point five kilogram (5 parts by weight) of Epikote 1009 (made by Yuka Shell Epoxy) and 4.0 kg (40 parts by weight) of Epikote 828 (made by Yuka Shell Epoxy) (about 1340 in average molecular weight) as bisphenol A type epoxy resins, 2.5 kg (25 parts by weight) of Epikote 154 (made by Yuka Shell Epoxy) as a phenol novolak type resin, and 1.0 kg (10 parts by weight) of Denka Formal #100 (made by Denki Kagaku K.K.) as a PVF were stirred at 150°C for 2 hours, to be mixed, and cooled to 60°C, and 0.3 kg of DICY and 0.4 kg of DUMU were added. The mixture was stirred to obtain a resin composition. As done in Example 1, it was made into a prepreg, and a unidirectional composite was obtained. Tension tests were executed in the perpendicular direction, and the results showed 6.2 kg/mm² strength, 0.76% elongation and 840 kg/mm² elastic modulus without any enhancement in physical properties. The PVF grains dispersed in the hardened resin were as coarse as 15 microns (µm).

If the grain size of the PVF dispersed is large like this, the effect of enhancing physical properties cannot be obtained.

### BRIEF DESCRIPTION OF THE DRAWINGS

Fig. 1 is a microphotograph showing a section of a composite material conforming to the present invention. Fig. 2, is a microphotograph showing a composite material not conforming to the present invention (the size of the PVF grains is too large).

## Claims

1. A composite material comprising an epoxy resin composition hardened by dicyandiamide and/or a urea derivative; reinforcing fibers; and a 1 to 30 parts by weight of a polyvinyl formal based resin of 5 micrometers or less in average grain size finely dispersed in each 100 parts of said epoxy resin composition.

2. A composite material according to Claim 1, wherein the reinforcing fibers are selected from aromatic polyamide fibers, glass fibers, silicon carbide fibers, boron fibers,alumina fibers and stainless steel fibers.

3. A composite material according to Claim 1, wherein the reinforcing fibers are carbon fibers.

4. A composite material according to any preceding claim, wherein the amount of the polyvinyl formal is 3 to 20 parts by weight based on 100 parts by weight of the epoxy resin composition.

5. A composite material according to any preceding claim, wherein the epoxy resin composition contains 10 to 40% by weight of a bisphenol type epoxy resin having a number average molecular weight of 4000 or more.

6. A composite material according to any of Claims 1 to 4, wherein the epoxy resin composition contains 40 to 100% by weight of a bisphenol type epoxy resin having a number average molecular weight in the range 360 to 1100 or 1800 to 3500.

7. A composite material according to claim 6, wherein the epoxy resin composition contains up to 60 weight percent of a phenol novolak type epoxy resin.

8. A composite material according to claim 5, wherein the epoxy resin composition contains 20 to 45 weight percent of a phenol novolak type epoxy resin.

9. A composite material according to any preceding claim, wherein the polyvinyl formal based resin is composed of 60% or more of vinyl formal and a balance of vinyl acetate and vinyl alcohol, and has an average polymerization degree of 1000 or less.

## Patentansprüche

1. Verbundmaterial, umfassend eine Epoxyharzzusammensetzung, die durch Dicyandiamid und/oder ein Harnstoffderivat gehärtet ist; Verstärkungsfasern; und 1 bis 30 Gew.-Teile eines Harzes auf Polyvinylformalbasis mit einer durchschnittlichen Korngröße von 5 µm oder weniger, das in jeweils 100 Gew.-Teilen der genannten Epoxyharzzusammensetzung feindispergiert ist.

2. Verbundmaterial nach Anspruch 1, worin die Verstärkungsfasern aus aromatischen Polyamidfasern, Glasfasern, Siliziumkarbidfasern, Borfasern, Tonerdefasern und Fasern aus rostfreiem Stahl ausgewählt sind.

3. Verbundmaterial nach Anspruch 1, worin die Verstärkungsfasern Kohlenstoff-Fasern sind.

4. Verbundmaterial nach einem der vorhergehenden Ansprüche, worin die Menge an Polyvinylformal 3 bis 20 Gew.-Teile, bezogen auf 100 Gew.-Teile der Epoxyharzzusammensetzung, beträgt.

5. Verbundmaterial nach einem der vorhergehenden Ansprüche, worin die Epoxyharzzusammensetzung 10 bis 40 Gew-% eines Epoxyharzes vom Bisphenoltyp mit einem durchschnittlichen numerischen Molekulargewicht von 4000 oder mehr enthält.

6. Verbundmaterial nach einem der Ansprüche 1 bis 4, worin die Epoxyharzzusammensetzung 40 bis 100 Gew.-% eines Epoxyharzes vom Bisphenoltyp mit einem durchschnittlichen numerischen Molekulargewicht im Bereich von 360 bis 1100 oder 1800 bis 3500 enthält.

7. Verbundmaterial nach Anspruch 6, worin die Epoxyharzzusammensetzung bis zu 60 Gew.-% eines Epoxyharzes vom Phenolnovolaktyp enthält.

8. Verbundmaterial nach Anspruch 5, worin die Epoxyharzzusammensetzung 20 bis 45 Gew.-% eines Epoxyharzes vom Phenolnovolaktyp enthält.

9. Verbundmaterial nach einem der vorhergehenden Ansprüche, worin das Harz auf Polyvinylformalbasis aus 60% oder mehr Vinylformal und einem Rest aus Vinylacetat und Vinylalkohol besteht und einen durchschnittlichen Polymerisationsgrad von 1000 oder weniger aufweist.

## Revendications

1. Matériau composite comprenant une composition de résine époxy durcie par du dicyandiamide et/ou un dérivé d'urée ; des fibres de renforcement ; et 1 à 30 parties en poids d'une résine à base de polyvinyl formal de 5 microns ou moins de taille moyenne du grain, finement dispersée dans 100 parties de la composition de résine époxy.

2. Matériau composite selon la revendication 1, caractérisé en ce que les fibres de renforcement sont choisies parmi des fibres de polyamide aromatique, des fibres de verre, des fibres de carbure de silicium, des fibres de bore, des fibres d'alumine et des fibres d'acier inoxydable.

3. Matériau composite selon la revendication 1, où les fibres de renforcement sont des fibres de carbone.

4. Matériau composite selon l'une quelconque des revendications précédentes, où la quantité du polyvinyl formal est de 3 à 20 parties en poids en se basant sur 100 parties en poids de la composition de résine époxy.

5. Matériau composite selon toute revendication précédente, où la composition de résine époxy contient 10 à 40% en poids d'une résine époxy du type bisphénol ayant un poids moléculaire moyen en nombre de 4.000 ou plus.

6. Matériau composite selon l'une quelconque des revendications 1 à 4, où la composition de résine époxy contient 40 à 100% en poids d'une résine époxy du type bisphénol A ayant un poids moléculaire moyen en nombre compris entre 360 et 1.100 ou 1.800 et 3.500.

7. Matériau composite selon la revendication 6, où la composition de résine époxy contient jusqu'à 60% en poids d'une résine époxy du type phénol novolaque.

8. Matériau composite selon la revendication 5, où la composition de résine époxy contient 20 à 45 % en poids d'une résine époxy du type phénol novolaque.

9. Matériau composite selon toute revendication précédente, où la résine à base de polyvinyl formal est formée de 60% ou plus de vinyl formal, le reste étant formé d'acétate de vinyle et d'alcool vinylique et a un degré moyen de polymérisation de 1.000 ou moins.
